(19) Europäisches Patentamt
European Patent Office
Office européen des brevets

(11) Publication number: **0 424 701 A1**

(12) **EUROPEAN PATENT APPLICATION**

(21) Application number: **90119015.7**

(51) Int. Cl.[5]: **C03C 25/02**

(22) Date of filing: **04.10.90**

The title of the invention has been amended (Guidelines for Examination in the EPO, A-III, 7.3).

(30) Priority: **04.10.89 US 417145**

(43) Date of publication of application: **02.05.91 Bulletin 91/18**

(84) Designated Contracting States: **BE CH DE ES FR GB IT LI NL**

(71) Applicant: **PPG INDUSTRIES, INC.**
**One PPG Place**
**Pittsburgh Pennsylvania 15272(US)**

(72) Inventor: **Lawton, Ernest Linwood**
**4107 Lee Manor Drive**
**Allison Park, Pa. 15101(US)**
Inventor: **Wu, Shih-Jen**
**133 Oakhurst Road**
**Pittsburgh, Pa. 15215(US)**

(74) Representative: **Sternagel, Hans-Günther, Dr. et al**
**Patentanwälte Dr. Michael Hann Dr. H.-G. Sternagel Sander Aue 30**
**W-5060 Bergisch Gladbach 2(DE)**

(54) **Glass fiber textile strands.**

(57) A glass fiber textile strand having thereon the dried residue of a aqueous-based binder of starch and oil is described. The starches are conventional, the oil is a nonionic lubricant which is a hydrogenated vegetable oil, and/or fatty acid ester of non-polymeric polyhydric alcohols and/or mineral oil. The starch is present in an amount greater than 35 weight percent of the nonaqueous components of the binder and the oil is present in an amount greater than 25 weight percent of the nonaqueous components. The binder also contains a non-starch film former, cationic lubricant other than alkyl imidazoline reaction product of tetraethylene pentamine and stearic acid, and at least one suitable emulsifier for the oil. The binder may also have an organoalkoxysilane or its hydrolysis products and a biocide.

EP 0 424 701 A1

# GLASS FIBER TEXTILE STRANDS AND IMPROVEMENTS THEREON

This application is a continuation-in-part application of patent application serial number 220,640 filed July 18, 1988.

The present invention relates to glass fiber textile strands and improvements thereon. More particularly, the present invention relates to glass fiber textile strands having a starch-oil binder which represents an improvement over conventional starch-oil binders. Still more particularly, the present invention relates to an improved starch-oil containing glass fiber strand in which the starch-oil binder ingredients are utilized in quantities and proportions not generally employed heretofore.

## Background of the Invention

In the past starch-oil binders have bean utilized on glass fibers which have been consolidated into textile strand form. Thus, in the book "The Manufacturing Technology of Continuous Glass Fibers" by K. L. Lowenstein, Elsivier Publishing Company, New York, 1973, at pages 192-193, the author describes in general the typical starch-oil binders utilized by the fiber glass industry today in preparing textile glass fiber strands. Strands containing binders like those described in the Lowenstein work have been utilized for many years in the textile industry to weave fiber glass cloth which has then been used for decorative fabrics and as reinforcements in high pressure laminates which are used in the printed wiring board industry. The latter use is by far the more important use today for glass fiber textile strands. In general these strands have been treated with starch-oil mixtures and then dried to thereby leave a starch-oil residue on the fiber, and they have been twisted into textile yarn. After the strands have been woven into cloth, the sizes are typically removed by heat cleaning. This removal of the size by heat cleaning permits the weaver to dye or otherwise coat or treat the fibers in the cloth to prepare them for use in woven form for such applications as circuit board reinforcements, decorative fabrics and the like.

It has been found in recent years that heretofore generally acceptable starch-oil binders utilized to form glass fibers do not always function adequately in modern equipment. Thus, in air jet looms, for example, unsatisfactory levels of broken filaments frequently occur using starch-oil binders. Thus, starches such as those described in U.S. Patents 3,227,192 and 3,265,516 do not always form a satisfactory residue on the glass filaments making up a given textile strand when those strands are being utilized in twisted yarn form as fill yarns in an air jet loom. Attempts have been made to provide non-starch type binders for textile yarn applications utilizing glass fibers to form the yarns and while film forming materials such as polyvinylpyrrolidone and carboxylated styrene butadiene copolymers and polyurethane polymers satisfactorily provide film formers that significantly reduce broken filament levels over starch-oil mixtures, they are subject to other problems such as binder migration. Further, they are often found to be unsatisfactory in air jet looms which are much faster than the conventional shuttle looms.

In the aforementioned application fiber glass cloth is woven from glass fiber textile strands containing starch-oil binders, and the cloth is then used to ply up laminates for the preparation of circuit boards utilized in the computer industry. As the circuit board art has developed, the ultimate end user, i.e., the circuit board manufacturer,is requiring more stringent quality requirements with respect to the cloth utilized to manufacture the laminates. Similarly, since the cloth is manufactured by textile manufacturers, they have imposed constantly higher quality standards on the supplier of the textile strands utilized to prepare such cloth. One of the more stringent requirements of today's textile weaver is a demand for strands which exhibit a substantial reduction in the number of broken filaments contained in the given textile strand. Because of this requirement for reduced broken filaments, better binders have been sought by the fiber glass industry to reduce the number of broken filaments normally found in a multifilament textile strand using conventional binders. A second and equally important consideration in the preparation of any textile glass binder strand is that the binder must provide a strand that effectively operates in modern air jet looms. Modern air jet looms operate at much faster speeds than the old conventional shuttle looms. Thus, the textile strands manufactured today have to have the capability of being able to be inserted in the loom shed in the requisite time when a high speed air jet loom, for example, is employed to manufacture the cloth.

Thus a need exists in the art to provide a glass fiber textile strand which has enhanced qualities with respect to the broken filament count experienced in preparing the strand and in providing a finished product. A need also exists to provide a starch-type binder which can be readily used in modern high speed air jet looms. Finally, a need also exists for any such strand having low broken filament counts and adequate insertion times with respect to high speed air jet looms to also be capable of undergoing the

conventional beat cleaning as practiced by the cloth manufacturers today with the finished cloth product.

## Summary of the Invention

In accordance with the instant invention a glass fiber textile strand having low broken filaments, acceptable strand insertion times in high speed looms and good heat cleaning capability is provided by placing on the strands an aqueous-based, starch-oil binder having adjusted quantities of at least one starch and of a particular type of oil and having a non-starch film forming polymer and a particular type of cationic lubricant.

More particularly, the present invention relates to a

glass fiber textile strand comprising a multiplicity of glass fibers in bundle form having on the surface of the fibers the dried residue of a binder, comprising:

a) at least one starch in an amount of at least 35 weight percent of the non-aqueous components of the binder present as the predominant film forming material;

b) oil selected from the group consisting of hydrogenated vegetable oil, fatty acid esters of nonpolymeric polyhydric alcohols and mineral oils and mixtures thereof where the oil is present in an amount of at least 25 weight percent of the non-aqueous components of the binder and the ratio of oil to starch is greater than 5/12 (0.4) and extends to 1.5;

c) at least one emulsifier for the oil that is present in an effective amount to form an oil-in-water emulsion of the oil:

d) second film former that is other than starch and that provides integrity to the bundle and that is present in an amount ranging from 1 to about 20 weight percent of the non-aqueous components of the binder, where any amount greater than 5 weight percent is present is accompanied with a concommitant reduction in the amount of oil that is present from an amount of 40 weight percent;

e) cationic lubricant other than alkyl imidazoline reaction product of tetraethylene pentamine and stearic acid in an effective internal lubricating amount;

f) water present in an effective amount for application of the binder having a total non-aqueous components in the range of around 1 to around 30 weight percent of the aqueous binder; and where the binder is essentially free of an alkyl imidazoline reaction product of tetraethylene pentamine and stearic acid and gamma aminopropyltriethoxysilane and where the residue of the binder on the bundle on a loss on ignition basis is in the range of around 0.9 weight percent to around 3 weight percent.

Still more particularly, the present invention relates to a

glass fiber textile strand comprising a multiplicity of glass fibers in bundle form having on the surface of the fibers the dried residue of a binder, comprising:

a) two starches present in a ratio of around 1:1 to give a combined amount of at least 35 weight percent of the non-aqueous components of the binder present as the predominant film forming material;

b) oil selected from the group consisting of hydrogenated vegetable oil, fatty acid esters of non-polymeric polyhydric alcohols and mineral oils and mixtures thereof where the oil is present in an amount of at least 27 to 40 weight percent of the non-aqueous components of the binder and the ratio of oil to starch is greater then 5/12 (0.4) and extends to 1;

c) two emulsifiers for the oil that is present in an effective amount to form an oil-in-water emulsion of the oil:

d) second film former that is selected from the group consisting of polyvinylpyrrolidone, polyvinylalcohol, and polyvinylacetate and mixtures thereof and that provides integrity to the bundle and that is present in an amount ranging from 1 to about 15 weight percent of the non-aqueous components of the binder, where any amount greater than 5 weight percent is present is accompanied with a concommitant reduction in the amount of oil that is present from an amount of 35 weight percent;

e) cationic lubricant that is a reaction product of a mixture of fatty acids having from 2 to 18 carbon atoms with a polyethylenimine having a molecular weight of about 1200, wherein the reaction product has a residual amine value of from about 300 to 400 present in an effective lubricating amount in the range of around 0.5 to around 5 weight percent of the non-aqueous components;

f) an organo functional alkoxysilane or its hydrolysis products other than gamma amino propyltriethoxysilane in an amount in the range of around 1 to 7 weight percent of the non-aqueous components; and

g) water present in an effective amount for application of the binder having a total non-aqueous components in the range of around 1 to around 30 weight percent of the aqueous binder; and where the binder is essentially free of an alkyl imidazoline reaction product of tetraethylene pentamine and stearic acid and gamma aminopropyltriethoxysilane and where the residue of the binder on the bundle on a loss

on ignition basis is in the range of around 0.9 weight percent to around 3 weight percent.

Even more particularly, the present invention relates to

glass fiber strands having the dried residue of a starch-oil textile binder containing in addition effective amounts of internal lubricants, biocides and emulsifiers thereon, the improvement comprising having present in said residue an effective amount of a film former other than starch, as the oil component a synthetic oil from the group consisting of trimethylolpropane triester and pentaerythritol tetraester and mixtures thereof, and starch in an amount of below 50 percent by weight basis the non-aqueous components in the binder.

The amounts of the starch and oil that are present in the binder on the basis of weight percent of the non-aqueous components of the aqueous-based binder are at least 35 and at least 25, respectively. With these amounts of starch and oil, the ratio of the amounts of oil to starch is at least greater than 0.4 and can be as great as 1.5. The particular type of oil is a hydrogenated vegetable oil and /or mineral oil and/or fatty acid ester of a nonpolymeric polyhydric alcohol. The amount of starch assists in providing an effective amount of a film former for the textile strands of the present invention. By an effective amount is meant an amount of film former sufficient to adequately bind the individual glass fiber filaments together and maintain the integrity of the strand bundle during processing.

The non-starch film forming polymer assists the starch in providing an effective amount of film former by its capability to tack bond the filaments or fibers together at various contact points along the fibers. This second film forming polymer is present in an amount in the range of about 1 to about 20 weight percent of the non-aqueous components of the binder. Such materials are the homopolymers and copolymers of poly-(vinylpyrrolidone), poly(vinylacetate), and poly(vinylalcohol) and the like. When the amount of the second film former exceeds about 5 weight percent of the non-aqueous components, additional amounts are accompanied with a concomittant reduction in the amount of oil lubricant to less than around 40 weight percent of the non-aqueous components...

Also present in the binder is the cationic lubricant in an effective lubricating amount and emulsifiers in an effective oil dispersing or emulsifying amount. The cationic lubricant is other than an alkyl imidazoline reaction product of tetraethylene pentamine and stearic acid, although very small amounts of this material in less than effective internal lubricating amounts may be present. The effective internal lubricating amount reduces the abrasion of fibers against one another during processing. The effective amount of one or more emulsifiers is that to provide an oil-in-water dispersion or emulsion, depending on whether the oil is a solid or liquid at ambient temperatures. This assists in providing an adequate dispersion or emulsion of the textile binder during use when applying it to the fibers to form the strands or bundles of fibers.

In addition to the presence of the particular above-recited components in the quantities recited above, the aqueous-based binder may also have present an effective amount of biocides and organoalkoxysilane or its hydrolysis products and an amount of wax up to around 25 weight percent. The biocides are present, of course, for the practical purpose of preventing any mildew or fungus growths occurring since starch is used to prepare the strands, and starch remains on the strands after drying. The silanes are those other than gamma aminopropyltriethoxysilane that are present in effective amounts to increase the tensile strength of the strand. Any amount of wax is accompanied with a concomittant reduction in the amount of starch to less than 65 weight percent but not less than 35 weight percent of the non-aqueous components.

The aforedescribed starch-oil binder has enough water to provide a viscosity of the binder sufficient for application of the binder to the fibers during their formation and production into strands. The strands with the binder have the moisture content of binder reduced by drying to form the glass fiber textile strands of the instant invention having the dried residue of the binder in an amount of around 0.3 to around 3 weight percent of the strand.

## Detailed Description of the Invention

The textile strands of the present invention having the dried residue of the aqueous-based binder are bundles of fibers that were treated with the binder. These strands can provide up to around a 90 percent reduction in broken filaments over some currently available commercial glass textile strands. Such an improvement is obtained while also maintaining the twistability, weaveability, heat-cleanability, and slashing compatibility for the textile strands. In the following description of the textile strand of the present invention reference to "weight percent" for components of the binder refers to weight percent of the non-aqueous components of the binder. This includes the solids content of emulsions and dispersions even those that are aqueous-based and non-aqueous liquid materials and solid materials. When the terms "weight percent" are used in a different context this will be noted.

The starches employed in the instant invention may be any starch or modified starch or mixtures of starches suitable for utilization with glass fibers and known by those skilled in the art to be useful in aqueous chemical treating compositions used as a sizing for glass fibers. Typical, nonexclusive examples of such starches are those taught in U.S. Patents 3,227,192, 3,265,516 and 4,002,445.

It is preferred in the preparation of starches for the instant invention that starches having low amylose content by utilized. By low amylose content as used herein in the specification and claims is meant a starch composition containing 10 percent up to about 40 percent amylose in the starch, preferably between 20 to 30 percent. The preferred embodiment of the instant invention utilizes a modified mixture of potato and a crosslinked corn starch both having a low amylose content. Starches conforming to these criteria are Amaizo 213 starch manufactured by the American Maize Products Company and National 1554 manufactured by National Starch Company. In the preferred practice of the invention a mixture of the crosslinked starch and the modified potato starch is used.

The cationic lubricants typically utilized in accordance with this invention are other than the alkyl amine imidazoline reaction products of a polyalkylene pentamine and stearic acid such as the material sold under the trade name Cation X manufactured by Lyndall Chemical Company. Suitable cationic lubricants are the amidated polyamine lubricants including the partially amidated polyalkylenes imines such as the reaction product of mixtures of $C_{12}$ to about $C_{18}$ fatty acids with a polyethylene amine having a molecular weight of about 1200 such as those disclosed in U.S. Patent 3,597,265.

These reaction products have a residual amine value of from about 300 to about 400 and may be used as is or in diluted form. Preferably the amidated fatty acid is pelargonic acid. The materials above referred to are manufactured by Emery Industries of Cincinnati, Ohio, under the trade designations Emery 6717 and Emery 6760, which is a 65 percent version of the 6717 material. The lubricants are used in amounts based on weight percents of the non-aqueous components of the binder of greater than 1 and up to around 6 and preferably from 1.5 to 4. It is theorized that these cationic lubricants act as internal lubricants between the fibers, since they associate with negative charges on the surface of the glass fibers.

It is also an important consideration in the practice of the invention that a film former other than starch be present in effective amounts and essentially the quantities used are such that they effectively cover the strands and provide integrity to the bundle, i.e., the bundle maintains its compactness after the filaments have been gathered in strand form and maintain that integrity when the strands are dried and subsequently processed. The non-starch or second film former utilized in accordance with this invention is preferably a polyvinyl pyrrolidone homopolymer (PVP). Other film formers such as conventional polyvinylacetates, polyvinyl alcohols, epoxy resins, polyesters and the like may also be employed. An alternative to the PVP is low molecular weight polyvinyl acetates since they provide a softer film on the surface of the glass fiber bundles. As previously mentioned, the amount of this film former is generally in the range of around 1 to around 20 weight percent, and preferably around 3 to 15 weight percent so that the one or more starches always constitute the predominant film forming material in the binder. When this material is PVP and when its amount is greater than around 5 weight percent, the amount of oil lubricant is less than 40 weight percent and preferably less than 35 weight percent. In other words when the amount of PVP is increased to greater than 5 weight percent, there is a concomittant decrease in the amount of oil lubricant to less than 40 or less than 35 weight percent. Preferably this reduction is on a one to one basis. The most preferred effective amount of film former for this purpose utilizing, for example, PVP would be in the area of 3-8 percent. These same quantities may be used for other film forming ingredients.

The oil nonionic lubricants that are useful include hydrogenated vegetable oils, fatty acid esters of non-polymeric polyhydric alcohols, mineral oils and mixtures and blends of these. Typical examples of such hydrogenated oils include the hydrogenated oils of cottonseed oil, corn oil, soybean oil, glyceroltrioleate and the like. These materials may be either a liquid or a solid at ambient temperatures, i.e., around 18 to 23 degrees Celsius, but preferably a hydrogenated vegetable oil that is a solid at room temperature is used. The amount of the nonionic lubricant present ranges from greater than 25, preferably greater than 27, weight percent up to an amount not greater than the amount which reduces the hardness of the strand resulting in sloughing of the strand from a strand package. This latter amount is generally an amount of double the amount of oil to the combined amount of the film forming materials on a weight percent basis in the binder. Also amounts is excess of this stated amount deleteriously impact upon the twistability of the sized fibers into textile yarn. The ratio of the amounts of oil to the amounts of starch is greater than 5/12 or 0.4 an generally up to a ratio of around 1.5. A suitable hydrogenated vegetable oil, and the preferred one, is that available as Eclipse 102 hydrogenated soybean oil.

A suitable example of an oil that is a fatty acid ester of a non-polymeric polyhydric alcohol is a triol oil like the Kessco oils that are a trimethylolpropane triester, or a pentaerythritol tetraester. A typical structural formula of the trimethylolpropane triester is as follows.

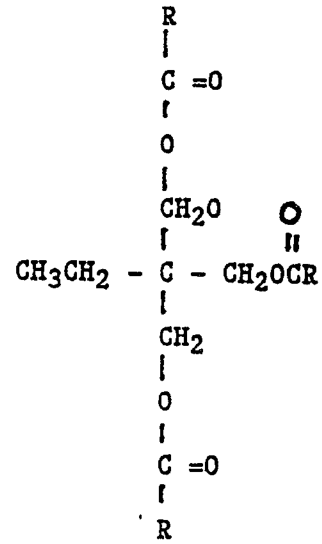

where R is $C_7$ to $C_9$.

The chemical structure of the pentaerythritol tetraester is indicated as follows.

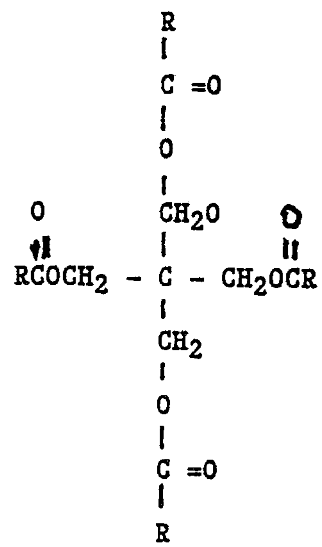

where R is $C_7$ to $C_9$.

In preparing the dispersions in accordance with the instant invention, recourse to the utilization of emulsifiers is had. Any one or a combination of emulsifiers for preparing an oil-in-water dispersion or emulsion of the aforedescribed oils that are known to those skilled in the art are suitable in the present invention. Non-exclusive examples include those disclosed in U.S. Patents 3,227,192; 4,681,805; and 4,197,349. Typical emulsifiers are materials such as Igepal CA-630 which is an octylphenoxy poly-(ethyleneoxy) ethanol wetting agent. Another typical and suitable material is Triton®X-100 which is an octylphenoxypolyethoxy ethanol manufactured by the Rohm and Haas Company. These may be used alone or as mixtures. Thus, in the preferred embodiment of the invention a mixture of both Igepal CA-630 and Triton®X-100 are employed in equal amounts by weight. As long as the emulsifier or wetting agents used have suitable hydrophilic, lipophilic balance in the emulsion, recourse to any of the conventional wetting agents may be had in accordance with the practice of the invention. Generally, each emulsifier, when a combination of them is employed, is present at 1.8 to 4.5 percent by weight of the solids. In any event the total quantity of emulsifiers used is typically between 3 to 9 percent by weight of the solids.

Suitable oil-in-water dispersions or emulsions are prepared utilizing the one or more of the oil lubricants and one or more of the emulsifiers generally described above. To maintain the stability of the dispersion or emulsion in the binder care is taken to insure that, on a solids basis, the weight percent of all of the starch components are preferably lower than 50 percent, most preferably around 45 percent and below but greater

than 35 weight percent. Similarly, the oil lubricant which is utilized, is provided in amounts ranging from greater than 25 to around 40 percent, and most preferably 27 to 38 percent so that preferably the ratio of the amounts of oil to starch is less than 1.

Typically fungicides are employed in sizes of the instant invention to prevent mold attack on amylose-containing starch derivatives. Therefore, in any binder utilized in accordance with this invention using the amylose starches a metallo organic quaternary type material such as tributyltin oxide can be employed as well as materials such as methylene-bis-thiocyanate manufactured by ChemTreat, Inc. Under the trade name Chemtreat C1-214. Biomet 66 is a typical metallo containing compound that can be used and is a bis(tri-n-butyltin) oxide and n-alkyldimethylbenzyl ammonium chloride manufactured by Chemical Co., Inc.

Also, in accordance with this invention a small quantity of silane may be employed. Any silanes used in the fiber glass sizing art other than gamma-aminopropyltriethoxysilane may be utilized. Thus, di and poly-aminosilanes, vinyl silane and the preferred glycidol propyltrimethoxysilanes and the like may be employed. Specifically in the preferred embodiment, silanes such as A-187 manufactured by Union Carbide, and Z-6040, manufactured by Dow Corning Company, which are glycidoxypropyltrimethoxysilanes, are used.

Any natural and/or synthetic wax known to those skilled in the art may be used in the binder in an amount in the range of 0 to 25 weight percent. Suitable examples of the waxes are those described in U. S. Patent 4,795,678 (Girgis). When the amount is greater than zero, there is a concomittant decrease in the amount of starch to below around 65 weight percent for any increasing amount of wax. Preferably wax is not present in the binder so that the oil lubricant is the sole nonionic lubricant present in the binder.

Water is usually the carrier for the nonaqueous components in the size. The amount of water present in the size is that amount to facilitate the application of the aqueous size to the glass fibers preferably during their formation. To this end the total solids (non-aqueous) content of the aqueous size is generally in the range of around 0.5 to around 30 weight percent, and preferably around 3 to 10 weight percent. The total solids should be adjusted whereby the level of the size is acceptable for application to the glass fibers. For example, in a size which is predominantly water, the viscosity is between around 3 to around 60 centipoise at 20 °C. Thickening agents can be used to increase the viscosity of the size, but generally if the viscosity is higher than 100 centipoise at 20 °C, the size is difficult to apply to the glass fibers during their formation.

Generally the preparation of the binder occurs by the simultaneous or sequential addition of the components to form the aqueous binder. The preferred sequence of addition is the starch or starch blend, the oil lubricant or blend of oil lubricants in emulsion form, the non-starch film forming polymer, the cationic lubricant, the organoalkoxysilane, and the fungicide and the balance of water not already added with the individual components to achieve the desired volume and solids level for the binder.

The aqueous binder is applied to the glass fibers preferably during their formation by any method known to those skilled in the art. The application of the binder to the fiber results in strands of fibers having about 0.5 to about 3 weight percent of the binder, preferably around 0.8 to 1.4 weight percent on a loss on ignition (LOI) basis. The LOI test is a well-known technique for determining the amount of binder on glass fibers. It involves weighing the glass fibers with the coating or binder and burning the binder off of the glass fiber strand to determine the weight of the strand without the binder. The glass fiber can have any glass composition and be formed into fibers of any diameter known to those skilled in the art. For instance, suitable compositions include the "621-glass" and "E-glass" glass compositions and their lower or free boron and/or fluorine derivatives. The filament or fiber diameters generally range from around less than 3 to around 30 microns such as beta fibers to fibers with larger diameters that still allow for twisting of bundles of fibers. The glass fibers themselves can be formed by any method known to those skilled in the art by direct or indirect melt processes and forming the fibers through orifices in a bushing. Preferably water sprays are used to cool the fibers, and the fibers are treated with the aqueous binder preferably, shortly after their attenuation from the bushing and their cooling by the water sprays. The fibers are drawn from the bushing by a winder, and after the binder is applied, the fibers can be gathered into one or more strands and wound into an annular package on the winder. The glass fiber strands with binder in the multilayered packages are dried to reduce the moisture content of the package to generally in the range of about 1 to 15 weight percent of the package. Accomplishing the moisture reduction usually involves drying the packages in an oven at conventional temperatures and times or by air drying for conventional time periods. Another approach to drying involves placing the paper tube with the strand deposited thereon in a humidity and temperature-controlled environment and conditioning them for 8 hours. The strand are twisted and wound onto bobbins. The conditioning and air drying during twisting provides a dried residue of the binder on the surface of the filaments forming the unitary strand.

The twistable strand of glass fibers with binder of the present invention can be twisted by any glass fiber twisting technique known to those skilled in the art. For instance, any twist frames for twisting glass fibers known to those skilled in the art are useful in twisting the glass fibers of the present invention.

Generally twisting is carried out by feeding the strand or yarns at a controlled rate to a bobbin placed on a spindle rotating at a speed which would enable the yarn or strand to be wound onto the bobbin at a faster rate than the rate at which the strand or yarn is supplied. Generally, the strand is fed through a travelling eye located on a ring to control the placement of the fiber on the bobbin and the packing of the fiber layers on the bobbin. The ring moves up and down the actual length of the bobbin from its mounting on the twist frame. Generally the level of twist is in the range of around 0.5 to around 3 turns/inch. Twisting places a demand on the twistable strand in that the strand must be flexible enough to undergo the rigors of twisting and allow for the individual filaments being free to move in the bundle or strand. The twisted strand or yarn present on the bobbin is useful in producing woven and non-woven fabrics, knitted and/or braided products and reinforcement for various tape products and composite products. Woven fabric can be produced with any conventional shuttle loom, air jet loom, rapier loom, or shuttleless weaving machine known to those skilled in the art.

For a more complete understanding of the invention reference is made to the following examples which illustrate the manner of preparing the binders used to prepare strands in accordance with this invention. Example 1 with the Eclipse 102 oil from Durkee Industrial Foods Inc., Cleveland, Ohio substituted for the Kessco 887 oil constitutes the most preferred embodiment of the present invention.

Example 1

18.925 l (Five gallons) of a starch binder dispersion was made up in the following manner. To a slurry tank was added 6,650 grams of water and 247 grams of National 1554 starch and 247 grams of Amaizo 213 starch were added. The ingredients were then cooked in a jet cooker at 124°C(255° F)/5° at a circulation rate of 7.381 l(1.95 gallons)per minute for about 1 minute. The cooked starch was then pumped to the main mixing tank. To an Eppenbach mixing tank was added 393 grams of Kessco 887 synthetic oil, 39.5 grams of Triton®X-100 and 39.5 grams of Igepal CA-630. The Eppenbach mixer was started up and the contents heated to 60°C(140° F)/5°. All ingredients were mixed thoroughly and 944 grams of hot water at 60 - 71°C-(140-160° F)was added slowly until the mixture turned white and inverted, after which time the rest of the water was added. The resulting mixture was then transferred to the main mix tank.

In a separate mixing tank 615 grams of hot water was added and to that was added 54.9 grams of PVP K-30, a polyvinyl pyrrolidone film former (manufactured by GAF Chemical Corp.). The PVP K-30 was dispersed in the water with vigorous stirring until the PVP K-30 dissolved and the solution turned clear. This resulting liquid was then transferred to the main mixing tank. In another mixing tank 500 grams of water was placed and to that was added 2.7 grams of glacial acetic acid with slow stirring. To this was added 54.9 grams of Z-6040, and the mixture was slowly agitated until the solution turned clear. This mixture was then transferred to the main mixing tank. In another separate mixing tank, 188 grams of water was placed and 22 grams of Emery 6717 was dissolved in the hot water. The resulting material when thoroughly dissolved was then transferred to the main mixing tank. All the ingredients in the main mixing tank were then diluted with water to a final volume of 18.925 l(5 gallons) at a temperature of approximately 63°C(145° F)/5°.

Using conventional glass fiber forming equipment, the binder prepared as stated above was pumped from the main mining task through suitable tubing to a glass fiber forming level where a fiber glass forming bushing was located. The bushing utilized was a 800 tip 2G-75 bushing having located below it a belt applicator in which there vas a sump. The rubber belt attached to rollers which caused the belt to pass through a sump in the applicator to pick up the binder material that was used at the applicator's surface. The glass fibers or filaments drawn from the 800 tip bushing were then passed over and in contact with the surface of the rubber belt applicator and the binder on the surface of the belt was applied to the filaments as they were drawn over it. The filaments were then gathered into strand form at a gathering shoe and wound on a tubular sleeve placed over the surface of the high speed winder. The tubular sleeve with the strand deposited thereon was subsequently placed in a humidity and temperature controlled environment and conditioned for 8 hours. The resulting strand was then twisted and wound onto bobbins using conventional twisting equipment. Prior to and during the twisting a dried residue of the binder was left on the surface of the fibers. The amount of dried residue on the glass fiber strands formed was 1.03 percent by weight of the strand. The strand so prepared was then evaluated for broken filaments using a broken filament detector of the type described in U.S. Patent No. 4,610,789 and the broken filaments per 914.4m-(1000 yards)was measured. The results of the run are shown in Table 1 under the column 1.

Example 2

An identical binder formulation to that described in Example 1 was formulated and applied to a glass fiber strand utilizing the same forming position utilized in Example 1. The strand formed was dried as in Example 1. The LOI on the finished strand was 0.93 percent. The finished strand like that of Example 1 was exposed to the same broken filament detector and the broken filaments were counted. The results appearing in Table 1 under column 2.

Example 3

An identical binder formulation to that described in Example 1 was prepared. The resulting binder was applied to glass fiber strand in the same manner as described in Example 1 and the strand was dried as in Example 1. The resulting strand had an LOI of 0.99 percent. This strandwas subjected to the same broken filament detector as Example 1 and its broken filaments per 914.4 m(1000 yards)measured. The results are listed under Table 1 column 3.

Five addtional binders were prepared and applied to glass fibers to form glass fiber textile yarn or strand of the present invention. The method of preparation was similar to that of examples 1-3 for the components listed in table 1 for the additional examples, and the formation of the textile strand was also similar to that of examples 1-3. Table 1 shows the components in a weight percent solids (non-aqueous components) basis, and gives results of broken filament testing and for weaveability. The arrows in the weaveability line indicate a range of weaveability from the higher value "A" to the lover value of "C". In table 1 the term "BF" means broken filaments.

TABLE 1

Aqueous Binders

| Components | Examples With weight percent solids of components: 1 | 2 | 3 | 4 | 5 | 6 | 7 | 8 |
|---|---|---|---|---|---|---|---|---|
| **Starch** | | | | | | | | |
| National 1554 | 22.5 | 22.5 | 22.5 | 22.5 | 22.5 | 22.4 | 22.4 | 22.5 |
| Amaizo 213 | 22.5 | 22.5 | 22.5 | 22.5 | 22.5 | 22.4 | 22.4 | 22.5 |
| **Oils** | | | | | | | | |
| Eclipse 102 Hydrogenated Vegetable Oil | — | — | — | 7.2 | 17.9 | 15.8 | — | 36 |
| Kessco 887 Triol Oil | 35.8 | 35.8 | 35.8 | 28.7 | 17.9 | 15.8 | 31.8 | — |
| **Emulsifiers for Oil** | | | | | | | | |
| Triton® X-100 | 3.6 | 3.6 | 3.6 | 3.6 | 3.6 | — | 3.2 | — |
| Igepal 630 | 3.6 | 3.6 | 3.6 | 3.6 | 3.6 | 3.2 | 3.2 | — |
| Tween® 81 | — | — | — | — | — | 3.2 | — | 5.2 |
| Diglycol stearate | — | — | — | — | — | — | — | 1.8 |
| PVP K-30 | 5 | 5 | 5 | 4.8 | 4.8 | 10.2 | 10.2 | 5 |
| Emery 6717 Cationic Lubricant | 2 | 2 | 2 | 2 | 2 | 2 | 2 | 2 |
| Z-6040 Epoxyorganosilane | 5 | 5 | 5 | 5 | 5 | 5 | 5 | 5 |
| Chemtreat CL 2141 | 0.01 | 0.01 | 0.01 | 0.01 | 0.01 | 0.01 | 0.01 | 0.01 |
| BioMet-66 | — | — | — | — | — | — | — | — |
| Water | | | | 18.925 l (5 Gallons) | | | | |
| BF/914.4 m (1000 yds.) | 0.79 | 3.49 | 0.63 | 1.22 | 6.28 | 1.19[a] | 1.91 | 0.6 |
| Weaveability | B+ → C | | | A⁻ → C | B+ | A⁻ → B | A⁻ → C⁻ | B → C[b] |

a Average of three values 1.40, 0.97 and 1.19.

b One sample wasn't weaveable on one type of loom but a repeat sample was weaveable.

A strand having the dried residue of a conventional hydrogenated vegetable oil-starch binder similar to that described in the Lowenstein book referenced herein, was utilized as a control. The broken filament level of the control were measured by the same detector utilized in Examples 1-8. The control strand was formed from the same bushing utilized to run the Examples 1-8, and the average broken filaments detected utilizing this control was 5.76 per 914.4 m(1000 yards).

In addition to testing for the broken filament levels on the strands prepared in Examples 1-8 herein, the strands vere tested for weaveability using a various weaving looms. Insertion times for strands prepared by these examples were found to be acceptable for air jet loom operation. Migration profiles of the strands prepared in Examples 1-8 and that of the control were compared and the binder migration of the starch-oil binder of Examples 1-8 were found to be comparable to those of the control. Finally, experimentation with yarns prepared in accordance with the Examples 1-8 show these yarns to have acceptable heat cleaning

characteristics.

While the invention has been described with reference to certain specific examples and illustrated with embodiments, it is not intended to be limited thereby except insofar as appears in the accompanying claims.

## Claims

1. A glass fiber textile strand comprising a multiplicity of glass fibers in bundle form having on the surface of fibers the dried residue of a binder, comprising:

a) at least one starch in an amount of at least 35 weight percent of the non-aqueous components of the binder present as the predominant film forming material;

b) oil selected from the group consisting of hydrogenated vegetable oil, fatty acid esters of non-polymeric polyhydric alcohols and mineral oils and mixtures thereof where the oil is present in an amount of at least 25 weight percent of the non-aqueous components of the binder and the ratio of oil to starch is greater than 5/12 (0.4) and extends to 1.5;

c) at least one emulsifier for the oil that is present in an effective amount to form an oil-in-water emulsion of the oil:

d) second film former that is other then starch and that provides integrity to the bundle and that is present in an amount ranging from 1 to about 20 weight percent of the non-aqueous components of the binder, where any amount greater than 5 weight percent is present is accompanied with a concommitant reduction in the amount of oil that is present from an amount of 40 weight percent;

e) cationic lubricant other than alkyl imidazoline reaction product of tetraethylene pentamine and stearic acid in an effective internal lubricating amount;

f) water present in an effective amount for application of the binder having a total non-aqueous components in the range of around 1 to around 30 weight percent of the aqueous binder; and where the binder is essentially free of an alkyl imidazoline reaction product of tetraethylene pentamine and stearic acid and gamma aminopropyltriethoxysilane and where the residue of the binder on the bundle on a loss on ignition basis is in the range of around 0.9 weight percent to around 3 weight percent.

2. A glass fiber textile strand of Claim 1, comprising a multiplicity of glass fibers in bundle form having on the surface of the fibers the dried residue of a binder, comprising:

a) two starches present in a ratio of around 1:1 to give a combined amount of at least 35 weight percent of the non-aqueous components of the binder present as the predominant film forming material;

b) oil selected from the group consisting of hydrogenated vegetable oil, fatty acid esters of non-polymeric polyhydric alcohols and mineral oils and mixtures thereof where the oil is present in an amount of at least 27 to 40 weight percent of the non-aqueous components of the binder and the ratio of oil to starch is greater than 5/12 (0.4) and extends to 1;

c) two emulsifiers for the oil that is present in an effective amount to form an oil-in-water emulsion of the oil:

d) second film former that is selected from the group consisting of polyvinylpyrrolidone polyvinylalcohol, and polyvinylacetate and mixtures thereof and that provides integrity to the bundle and that is present in an amount ranging from 1 to about 15 weight percent of the non-aqueous components of the binder, where any amount greater than 5 weight percent is present is accompanied with a concommitant reduction in the amount of oil that is present from an amount of 35 weight percent;

e) cationic lubricant that is a reaction product of a mixture of fatty acids having from 2 to 18 carbon atoms with a polyethylenimine having a molecular weight of about 1200, wherein the reaction product has a residual amine value of from about 300 to 400 present in an effective lubricating amount in the range of around 0.5 to around 5 weight percent of the non-aqueous components;

f) an organo functional alkoxysilane or its hydrolysis products other than gamma amino propyltriethoxysilane in an amount in the range of around 1 to 7 weight percent of the non-aqueous components; and

g) water present in an effective amount for application of the binder having a total non-aqueous components in the range of around 1 to around 30 weight percent of the aqueous binder; and where the binder is essentially free of an alkyl imidazoline reaction product of tetraethylene pentamine and stearic acid and gamma aminopropyltriethoxysilane and where the residue of the binder on the bundle on a loss on ignition basis is in the range of around 0.9 weight percent to around 3 weight percent.

3. The strand of claim 1 or 2, wherein fatty acid ester of the non-polymeric polyhydric alcohol is a triolester and the starch content is below 50 percent by weight non-aqueous components.

4. The strand of claim 1 or 2, wherein the fatty acid ester of non-polymeric polyhydric alcohol is selected

from the group consisting of a triester or tetraester of caprylic, pelargonic or capric acids and the polyhydric alcohol is selected from the group consisting of trimethylolpropane and pentaerithritol.

5. The strand of claim 1 or 2 , wherein the second film former is selected from the group consisting of polyvinylpyrrolidone polyvinylalcohol, and polyvinylacetate and mixtures thereof and is present in an amount in the range of at above 3 to around 15 percent by weight of the non-aqueous components and where present in an amount in excess of 5 weight percent the amount of the oil that is present is less than 35 weight percent where for increasing amounts of the second film former greater than five weight percent there is a concommittant decrease in the amount of oil from 35 weight percent..

6. The strand of claim 1 or 2 wherein oil is present in an amount in the range of 27 to 35 and the starch is present in an amount in the range of 40 to 50 all amount in weight percent of the non-aqueous components and the ratio of the oil to the starch is a numerical dividend in the of 0.4 to less than 1.

7. The strand of claim 1, /, wherein two starch film formers are present in a ratio of around 1 to 1 to give a range of amounts of at least 35 weight percent of the non-aqueous components.

8. The strand of claim 1 or 2, wherein two oil emulsifying agents are present in a ratio of weight percents of the non-aqueous components in the range of around 1:1.

9. The strand of claim 1 or 2, wherein the cationic lubricant includes a reaction product of a mixture of fatty acids having from 2 to 18 carbon atoms with a poly ethylenimine having a molecular weight of about 1200, wherein the reaction product has a residual amine value of from about 300 to 400.

10. The strand of claim 1 , which includes an organo functional alkoxysilane or its hydrolysis products in an amount in the range of around 1 to 7 weight percent of the non-aqueous components.

11. The strand of claim 1 or 2, wherein the silane is selected from the group consisting of vinylorganoalkoxysilanes and its hydrolysis products and glycidoxyorganoalkoxysilane and its hydrolysis products.

12. The strand of claim 1 or 2 , wherein the hydrogenated vegetable is a solid at a temperature of around 18 to 24 degrees Celsius.

13. The strand of claim 1 or 2 , which includes wax in an amount up to 25 weight percent of the non-aqueous components where the presence of wax is accompanied with a concomittant reduction in the amount of starch present to less than 65 weight percent but in the range of at least 35 to 65 weight percent.

14. The strand of claim 1 , wherein the oil is present in an amount of at least 27 weight percent of the nonaqueous components of the binder.

15. The strand of claim 1 or 2 , wherein the binder also has an effective amount of at least one biocide.

16. The strand of claim 1 or 2 , wherein the dried residue an LOI from 0.9 to 2 weight percent is from an aqueous dispersion containing on a non-aqueous components content basis 45 percent of a blend of two starches, 35.8 percent of an oil selected from the group consisting of a solid hydrogenated vegetable oil and fatty acid ester of non-polymeric polyhydric alcohol selected from the group consisting of a triester or tetraester of caprylic, pelargonic or capric acids and the polyhydric alcohol is selected from the group consisting of trimethylolpropane and pentaerithritol, 7.2 percent emulsifiers, 5 percent poly(vinylpyrrolidone) film former, 2 percent cationic lubricant other than an alkyl imidazoline reaction product of tetraethylene pentamine and stearic acid and 5 percent of an organo functional alkoxysilane or its hydrolysis products other than gammaaminopropyltriethoxysilane.

17. Glass fiber strands having the dried residue of a starch-oil textile binder containing in addition effective amounts of internal lubricants, biocides and emulsifiers thereon, characterized by having present in said residue an effective amount of a film former other than starch, as the oil component a synthetic oil from the group consisting of trimethylolpropane triester and pentaerythritol tetraester and mixtures thereof, and starch in an amount of below 50 percent by weight basis the non-aqueous components in the binder.

18. The strand of claim 17, wherein the binder also has an effective amount of at least one biocide.

European Patent Office

# EUROPEAN SEARCH REPORT

Application Number

EP 90 11 9015

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 314 063 (NATIONAL STARCH AND CHEMICAL CORPORATION) * page 8, lines 32 - 56; claims 1-10 * | 1-18 | C 03 C 25/02 |
| X,Y | US-A-4 143 006 (WORKMAN) * column 1, line 61 - column 4, line 39 * | 1,3,4,6-9, 12-15,17, 18,5,10, 11 | |
| X,Y | US-A-4 168 345 (DE MASSEY) * column 2, line 62 - column 5, line 64 * | 1,3,4,6-9, 12-15,17, 18,5,10, 11 | |
| X,Y | FR-A-1 280 505 (OWENS-CORNING FIBERGLASS CORPORATION) * page 2, right-hand column, last paragraph page 4, right-hand column, paragraph 2 * | 1,5,6,9, 12,14,10, 11 | |
| Y | US-A-3 928 666 (MORRISON) * column 5, lines 60 - 68; claims * | 5 | TECHNICAL FIELDS SEARCHED (Int. Cl.5) |
| Y | US-A-4 397 913 (FAHEY) * column 8, lines 8 - 55 * | 10,11 | C 03 C |
| D,A | US-A-4 681 805 (PUCKETT) * claims * | 1-18 | |

The present search report has been drawn up for all claims

| Place of search | Date of completion of search | Examiner |
|---|---|---|
| The Hague | 12 December 90 | VAN BOMMEL L. |

CATEGORY OF CITED DOCUMENTS

- X: particularly relevant if taken alone
- Y: particularly relevant if combined with another document of the same catagory
- A: technological background
- O: non-written disclosure
- P: intermediate document
- T: theory or principle underlying the invention
- E: earlier patent document, but published on, or after the filing date
- D: document cited in the application
- L: document cited for other reasons
- &: member of the same patent family, corresponding document